# EUROPEAN PATENT APPLICATION

(11) **EP 4 826 878 A1**
(43) Date of publication of application: **21.10.2026**
(21) Application number: 26712736.3
(22) Date of filing: 22.01.2026
(51) Int. Cl.: H01M 50/244, H01M 50/249

(54) **BATTERY APPARATUS AND ELECTRICAL DEVICE**

(30) Priority: 26.02.2025 CN 202520314348 U
(71) Applicant: Contemporary Amperex Technology Co., Limited, Ningde, Fujian 352100 (CN)
(72) Inventor: CHEN, Hang, Ningde, Fujian 352100 (CN); WANG, Qing, Ningde, Fujian 352100 (CN); WANG, Yong, Ningde, Fujian 352100 (CN); GUO, Xinfei, Ningde, Fujian 352100 (CN)
(74) Representative: Lorenz Seidler Gossel Part. mbB
(86) International application number: PCT/CN2026/074220
(87) International publication number: WO 2026/179523

(57) **Abstract**

The present application relates to a battery apparatus and a power consuming device. The battery apparatus includes: a box body; at least two mounting members connected to the box body; and a first sealing assembly disposed on at least one of the mounting members and having a connection end and a protrusion end, where the connection end is connected to a connection surface of the corresponding mounting member, the protrusion end protrudes from the connection surface of the corresponding mounting member, and the protrusion end is sealed between the at least two mounting members. In the present application, the first sealing assembly is integrated onto the at least one mounting member, so that the first sealing assembly and the corresponding mounting member are formed into an integral structure, which can simplify a mounting and sealing structure. In addition, the protrusion end of the first sealing assembly can be better clamped between two structures that require sealing, for example, clamped between two mounting members, which can effectively improve the sealing effect between the two structures.

## Description

### CROSS-REFERENCE TO RELATED APPLICATIONS

The present application claims priority to Chinese Patent Application No. 2025203143481, filed on February 26, 2025 and entitled "BATTERY APPARATUS AND POWER CONSUMING DEVICE", which is incorporated herein by reference in its entirety.

### TECHNICAL FIELD

The present application relates to the field of battery technologies, and in particular, to a battery apparatus and a power consuming device.

### BACKGROUND

During use, a battery apparatus needs to be mounted to a vehicle or power consuming devices. Accordingly, there is a need to provide a mounting structure on a box body of the battery apparatus, so as to mount or fix the box body to a corresponding power consuming device through the mounting structure.

However, the sealing effect between the current mounting structure and the box body is poor when they are connected, easily affecting the overall sealing performance of the battery apparatus.

### SUMMARY

On that basis, the present application provides a battery apparatus and a power consuming device.

According to a first aspect, the present application provides a battery apparatus, including a box body, a first sealing assembly, and at least two mounting members. Each of the mounting members is connected to the box body and configured to fix the box body to an external structure. The sealing member is disposed on at least one of the mounting members and has a connection end and a protrusion end. The connection end is connected to a connection surface of the corresponding mounting member. The protrusion end protrudes from the connection surface of the corresponding mounting member, and the protrusion end is sealed between the at least two mounting members.

With the foregoing structure, the first sealing assembly is integrated onto the at least one mounting member, so that the first sealing assembly and the corresponding mounting member are formed into an integral structure, which can effectively reduce the number of parts in an assembling process, thereby simplifying the assembling process. Moreover, the first sealing assembly forms a lip sealing structure by means of the connection end and the protrusion end, which can effectively improve the sealing effect between the mounting member and the box body.

In some embodiments, the first sealing assembly is constructed into an elastic sealing member. As such, when the sealing is disposed between the mounting members or between the mounting member and the box body, the elastic sealing member can fill a gap between them in an interference manner, which can further improve the sealing effect.

In some embodiments, each of the mounting members includes a first mounting sleeve, a second mounting sleeve, and a third mounting sleeve. A mounting hole is provided on the box body. The second mounting sleeve has a first end and a second end that are disposed opposite each other. The second mounting sleeve penetrates through the mounting hole. The first end and the second end both extend out of the mounting hole. The first mounting sleeve is connected to the first end, and the third mounting sleeve is connected to the second end.

As such, with the provision of the first mounting sleeve, the second mounting sleeve, and the third mounting sleeve, a connection and fixation to the box body can be implemented, and the box body can be more stably mounted to the external structure such as a corresponding power consuming device, thereby implementing the assembling of the battery apparatus.

In some embodiments, the first sealing assembly includes a first sealing ring. The first mounting sleeve sleeves the first end. A first sealing groove is provided on a surface of the first mounting sleeve that is opposite the first end. A second sealing groove is provided on a surface of the first end that is opposite the first mounting sleeve. A connection end of the first sealing ring is connected to a groove inner wall of the first sealing groove. A protrusion end of the first sealing ring is clamped in the second sealing groove, to seal a gap between the first mounting sleeve and the first end.

With the foregoing structure, the first sealing ring can be more stably sealed between the first mounting sleeve and the second end of the second mounting sleeve, thereby improving the sealing effect between them.

In some embodiments, the first sealing assembly further includes a second sealing ring. The third mounting sleeve sleeves the second end. A first surface of the second end is disposed opposite the third mounting sleeve. A third sealing groove is provided on the first surface. A fourth sealing groove is provided on a surface of the third mounting sleeve that is opposite the first surface. A connection end of the second sealing ring is connected to a groove inner wall of the third sealing groove. A protrusion end of the second sealing ring is clamped in the fourth sealing groove, to seal a gap between the first surface and the third mounting sleeve.

With the foregoing structure, the second sealing ring can be more stably sealed between the third mounting sleeve and the second end of the second mounting sleeve, thereby improving the sealing effect between them.

In some embodiments, the battery apparatus further includes a second sealing assembly, the second sealing assembly being sealed between the first mounting sleeve and the box body.

In some embodiments, the battery apparatus further includes a second sealing assembly, the second sealing assembly being sealed between the second mounting sleeve and the third mounting sleeve.

With the provision of the second sealing assembly, the sealing between the first mounting sleeve and the box body and between the second mounting sleeve and the third mounting sleeve can be implemented, thereby further improving the sealing effect.

In some embodiments, the second sealing assembly includes a third sealing ring. The third sealing ring encloses an outer periphery of the first mounting sleeve. The third sealing ring has a first sealing surface, and the first sealing surface is attached to a surface of the box body.

With the foregoing structure, a contact area between the third sealing ring and the surface of the box body can be increased, further improving the sealing effect of the third sealing ring for a gap between the first mounting sleeve and the box body.

In some embodiments, the second sealing assembly further includes a fourth sealing ring. The second end has a second surface perpendicular to the first surface. The fourth sealing ring is disposed on the second surface and configured to seal a gap between the second surface and the third mounting sleeve.

With the provision of the fourth sealing ring, the sealing effect between the second mounting sleeve and the third mounting sleeve can be further improved.

In some embodiments, the fourth sealing ring has a second sealing surface, the second sealing surface being attached to a surface of the third mounting sleeve.

With the foregoing structure, a contact area between the fourth sealing ring and the inner wall of the third mounting sleeve can be increased, further improving the sealing effect of the fourth sealing ring for the gap between the second mounting sleeve and the third mounting sleeve.

In some embodiments, a third sealing assembly is further provided between the second mounting sleeve and the box body.

In some embodiments, a fourth sealing assembly is further provided between the second mounting sleeve and the third mounting sleeve.

With the foregoing structure, the sealing effect between the second mounting sleeve and the box body or between the second mounting sleeve and the third mounting sleeve can be further improved, making the sealing performance of the entire structure of the battery apparatus better.

In some embodiments, the third sealing assembly includes at least one fifth sealing ring. Each fifth sealing ring is sealed between the second mounting sleeve and a water cooling plate of the box body.

In some embodiments, the third sealing assembly includes at least one sixth sealing ring. Each sixth sealing ring is sealed between the second mounting sleeve and a bottom protection plate of the box body. As such, the sealing effect between the second mounting sleeve and the box body can be further improved.

According to a second aspect, the present application further provides a power consuming device, including the battery apparatus as described above.

In the battery apparatus and the power consuming device, each mounting member is connected to the box body, which can fix the box body to the external structure such as the power consuming device. Meanwhile, the first sealing assembly is fixedly disposed on at least one mounting member. That is, the first sealing assembly is integrated onto the at least one mounting member, so that the first sealing assembly and the corresponding mounting member are formed into an integral structure, which can simplify a mounting and sealing structure. In addition, the protrusion end of the first sealing assembly can be better clamped between two structures that require sealing, for example, clamped between two mounting members, which can effectively improve the sealing effect between the two structures.

### BRIEF DESCRIPTION OF THE DRAWINGS

To describe the technical solutions in the embodiments of the present application more clearly, the accompanying drawings required for describing the embodiments of the present application will be described briefly below. Apparently, the accompanying drawings described below show only some embodiments of the present application, and other drawings can be obtained by a person of ordinary skill in the art from the accompanying drawings without creative efforts.
FIG. 1 is a schematic structural view of a battery apparatus according to one or more embodiments;
FIG. 2 is a schematic structural view of a connection between a mounting member and a box body in a battery apparatus according to one or more embodiments;
FIG. 3 is a partially enlarged view of a position A in FIG. 2;
FIG. 4 is a schematic structural view of a first mounting sleeve in a battery apparatus according to one or more embodiments;
FIG. 5 is a schematic structural exploded view of a first mounting sleeve in a battery apparatus according to one or more embodiments;
FIG. 6 is a partial enlarged view of a position B in FIG. 2;
FIG. 7 is a schematic structural view of a second mounting sleeve in a battery apparatus according to one or more embodiments; and
FIG. 8 is a schematic structural exploded view of a second mounting sleeve in a battery apparatus according to one or more embodiments.

Description of reference numerals: 100. battery apparatus; 10. box body; 20. mounting member; 30. first sealing assembly; 40. second sealing assembly; 50. third sealing assembly; 60. fourth sealing assembly; 21. first mounting sleeve; 22. second mounting sleeve; 23. third mounting sleeve; 24. first end; 25. second end; 26. first sealing groove; 27. second sealing groove; 28. third sealing groove; 29. fourth sealing groove; 31. first sealing ring; 32. second sealing ring; 33. first sealing surface; 34. second sealing surface; 41. third sealing ring; 42. fourth sealing ring; 51. fifth sealing ring; 52. sixth sealing ring; 251. first surface; 252. second surface.

### DETAILED DESCRIPTION

To make the foregoing objectives, features, and advantages of the present application clearer and easier to understand, the following describes specific implementations of the present application in detail with reference to the accompanying drawings. In the following descriptions, many specific details are described for fully understanding of the present application. However, the present application may be implemented in many other manners different from those described herein. A person skilled in the art may make similar improvement without departing from the connotation of the present application. Therefore, the present application is not limited to the specific embodiments disclosed below.

In the description of the present application, it should be understood that orientation or position relationships indicated by the terms such as "center", "longitudinal", "transverse", "length", "width", "thickness", "upper", "lower", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease of describing the present application and simplifying the description, rather than indicating or implying that the mentioned apparatus or component should have a particular orientation or should be constructed and operated in a particular orientation. Therefore, such terms should not be construed as limiting of the present application.

In addition, in the case of the presence of terms "first" and "second", these terms are used merely for the purpose of description, and shall not be construed as indicating or implying relative importance or implying a quantity of indicated technical features. Therefore, a feature defined by "first" or "second" may explicitly indicate or implicitly include at least one of such features. In the description of the present application, in the case of the presence of the term "a plurality of", "a plurality of" means at least two, such as two and three, unless otherwise expressly defined.

In the present application, unless otherwise expressly specified and defined, in the case of the presence of the terms such as "mount", "connect", "connection", and "fix", these terms should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components, unless otherwise explicitly defined. A person of ordinary skill in the art may understand the specific meanings of the foregoing terms in the present application according to specific situations.

In the present application, unless otherwise explicitly specified or defined, in the case of the presence of a first feature being located "above" or "below" a second feature or other similar descriptions, it may mean that the first feature is in a direct contact with the second feature, or the first feature is in an indirect contact with the second feature through an intermediary. In addition, that the first feature being "above", "over", or "on" the second feature may indicate that the first feature is directly above or diagonally above the second feature, or may merely indicate that the horizontal position of the first feature is higher than that of the second feature. That the first feature is "below", "under", and "beneath" the second feature may indicate that the first feature is right below the second feature or diagonally below the second feature, or may merely indicate that the horizontal position of the first feature is lower than that of the second feature.

It should be noted that, if an element is referred to as "being fixed to" or "being disposed on" another element, the element may be directly on the other element, or an intermediate element may exist. When an element is considered as "being connected to" another element, the element may be directly connected to the other element, or an intermediate element may also exist. The terms "vertical", "horizontal", "upper", "lower", "left", "right", and similar expressions used in the present application, if existing, are merely used for an illustrative purpose, and do not indicate the only implementation.

Currently, in terms of the development of the market, power batteries are used in an increasingly wide range. The power batteries are used not only in energy storage power systems such as hydroelectric power plants, thermal power plants, wind power plants, and solar power plants, but also widely used in electric transportation means such as electric bicycles, electric motorcycles, and electric vehicles and other fields. With continuous expansion of application fields of the power batteries, demands in the market of the power batteries are also continuously expanding.

A structure of a battery apparatus generally includes a box body and a battery cell. The battery cell is placed in the box body, so that the box body provides an accommodating space for the battery cell and provides a good protection effect for the battery cell.

Specifically, on one hand, the box body can provide an accommodating space for the battery cell to protect the battery cell. On the other hand, the box body can be configured to connect to an external structure such as a power consuming device, so as to mount the battery apparatus onto the power consuming device.

Further, the box body usually requires a mounting structure for connecting to the power consuming device. That is, the mounting structure is disposed on the box body, so that the battery apparatus can be connected to the power consuming device by using the mounting structure on the box body as a force-bearing point, thereby implementing the mounting.

A gap is generated between the mounting structure and the box body when they are connected, and therefore, a sealing member is required to seal the gap between them. However, a sealing structure between the current mounting structure and the box body is complex and has a poor sealing effect, easily affecting the overall sealing performance of the battery apparatus.

Based on the foregoing consideration, to solve the problem of the poor sealing effect between the current mounting structure and the box body, one or more embodiments of the present application provide a battery apparatus, in which each mounting member is connected to the box body, which can fix the box body to the external structure such as the power consuming device. Meanwhile, a first sealing assembly is fixedly disposed on at least one mounting member. That is, the first sealing assembly is integrated onto the at least one mounting member, so that the first sealing assembly and the corresponding mounting member are formed into an integral structure, which can simplify a mounting and sealing structure. In addition, a protrusion end of the first sealing assembly can be better clamped between two structures that require sealing, for example, clamped between two mounting members, which can effectively improve the sealing effect between the two structures.

It should be noted that the battery apparatus described in the embodiments of the present application may include one or more battery cell assemblies configured to provide a voltage and a capacity. The battery cell assembly may include a plurality of battery cells, and the plurality of battery cells are connected in series, in parallel, or in a hybrid manner by using a bus component.

In some embodiments, the battery cell assembly is usually formed by arrangement of a plurality of battery cells. As an example, the battery cell assembly may be a battery module. The battery module is an independent module formed by arrangement and fixation of a plurality of battery cells. For example, the battery module may be formed by tying the plurality of battery cells with a strap.

In some embodiments, the battery apparatus may be a battery pack. The battery pack includes a box body and one or more battery cell assemblies, and the battery cell assembly is accommodated in the box body.

As an example, the battery cell assembly may be a battery module, and the battery cell assembly may be accommodated in the box body by fixing the battery module in the box body.

As an example, the battery cell assembly may alternatively be accommodated in the box body by directly fixing the plurality of battery cells in the box body.

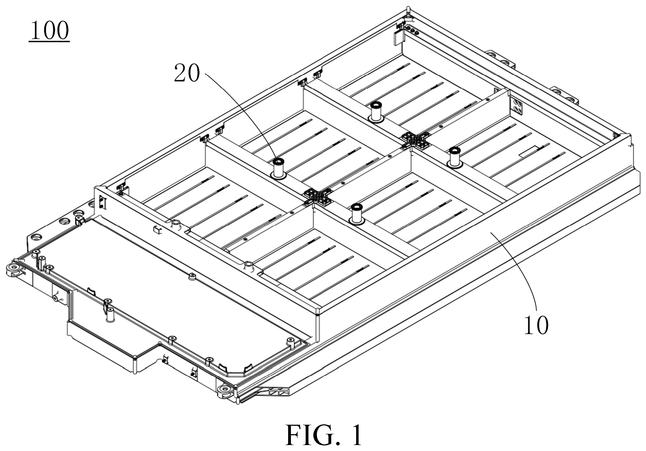

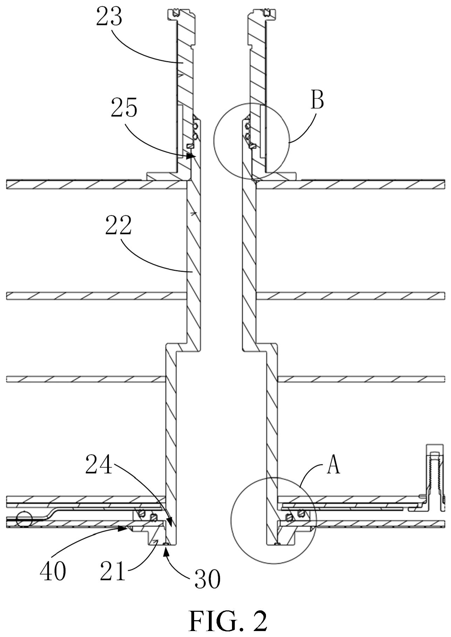

Referring to FIG. 1 and FIG. 2, an embodiment of the present application provides a battery apparatus 100, including a box body 10, at least two mounting members 20, and a first sealing assembly 30. Each mounting member 20 is connected to the box body 10 and configured to fix the box body 10 to an external structure. The first sealing assembly 30 is disposed on at least one of the mounting members 20, and has a connection end (not shown in the figure) and a protrusion end (not shown in the figure). The connection end is connected to a connection surface of the corresponding mounting member 20. The protrusion end protrudes from the connection surface of the corresponding mounting member 20, and the protrusion end is sealed between the at least two mounting members 20.

It should be noted that the battery apparatus 100 further includes a battery cell. The interior of the box body 10 is hollow, to form an accommodating cavity for accommodating the battery cell and other functional components. As such, the battery cell and the other functional components in the battery apparatus 100 are disposed in the accommodating cavity, and can be protected by the box body 10, making the entire structure of the battery apparatus 100 more stable.

Each mounting member 20 may be directly connected to the box body 10, and may alternatively be connected to the box body 10 through a mutual connection between the mounting members 20. After being connected to the box body 10, each mounting member 20 may use itself as a force-bearing point to mount and fix the box body 10 to the external structure such as a power consuming device.

The first sealing assembly 30 refers to a structure capable of sealing a gap between different mounting members 20. The first sealing assembly 30 is disposed on the at least one mounting member 20. That is, the first sealing assembly 30 is integrated onto the corresponding mounting member 20, so that the first sealing assembly 30 and the corresponding mounting member 20 are formed into an integral structure. As such, the number of parts in an assembling process can be reduced, simplifying an assembly structure.

Specifically, the first sealing assembly 30 may be integrated onto the corresponding mounting member 20 through a vulcanizing process, gluing, or other manners, but is not limited thereto, as long as a fixed connection between the first sealing assembly 30 and the corresponding mounting member 20 can be implemented. Details are not described here again.

The first sealing assembly 30 has the connection end and the protrusion end that are connected to each other. A surface of the mounting member 20 that is used for the connection with the first sealing assembly 30 is the connection surface. The connection end is connected to the connection surface of the corresponding mounting member 20, so that the first sealing assembly 30 can be smoothly integrated onto the corresponding mounting member 20.

Further, the protrusion end extends in a direction away from the connection surface, and protrudes from the connection surface. As such, the first sealing assembly 30 can be formed into a lip sealing structure. When the first sealing assembly 30 is sealed between two mounting members 20, the lip sealing structure can effectively improve the sealing effect.

With the foregoing structure, the first sealing assembly 30 is integrated onto the at least one mounting member 20, so that the first sealing assembly 30 and the corresponding mounting member 20 are formed into an integral structure, which can effectively reduce the number of parts in an assembling process, thereby simplifying the assembling process. Moreover, the first sealing assembly 30 forms a lip sealing structure by means of the connection end and the protrusion end, which can effectively improve the sealing effect between the mounting member 20 and the box body 10.

In some embodiments, the first sealing assembly 30 is constructed into an elastic sealing member. Specifically, the first sealing assembly 30 may be set to a rubber sealing member, but is not limited thereto.

With the foregoing structure, when the sealing is disposed between the mounting members 20, the elastic sealing member can fill a gap between them in an interference manner, which can further improve the sealing effect.

In some embodiments, each of the mounting members 20 includes a first mounting sleeve 21, a second mounting sleeve 22, and a third mounting sleeve 23. A mounting hole (not shown in the figure) is provided on the box body 10. The second mounting sleeve 22 has a first end 24 and a second end 25 that are disposed opposite each other. The second mounting sleeve 22 penetrates through the mounting hole. The first end 24 and the second end 25 both extend out of the mounting hole. The first mounting sleeve 21 is connected to the first end 24, and the third mounting sleeve 23 is connected to the second end 25.

It should be noted that, the box body 10 typically includes a bottom protection plate and a frame. The frame encloses an outer periphery of the bottom protection plate, and the frame and the bottom protection plate jointly form the accommodating cavity by enclosing. The mounting hole is provided on the box body 10, where the mounting hole may be provided on the bottom protection plate, may be provided on the frame, or may penetrate through both the bottom protection plate and the frame. A specific position where the mounting hole is provided on the box body 10 may be adjusted based on an actual mounting position of the mounting member 20. Details are not described here again.

Specifically, the first mounting sleeve 21 may be set as a bottom sleeve, the second mounting sleeve 22 may be set as a middle sleeve, and the third mounting sleeve 23 may be set as an adapting sleeve. The middle sleeve penetrates through the mounting hole, and both the first end 24 and the second end 25 are located outside the mounting hole. As such, the bottom sleeve may be connected to the first end 24 through screwing, clamping, or another connection manner, and the adapting sleeve may be connected to the second end 25 through screwing, clamping, or another connection manner, to implement a connection and fixation between the bottom sleeve, the middle sleeve, the adapting sleeve, and the box body 10.

Further, the bottom sleeve, the middle sleeve, and the adapting sleeve may be connected to the external structure such as a power consuming device through an external connection member such as a bolt, so as to mount the box body 10 onto the power consuming device.

Certainly, the first mounting sleeve 21 may alternatively be set as an adapting sleeve, in which case the third mounting sleeve 23 is set as a bottom sleeve. In this case, the first mounting sleeve 21 is configured to be connected to the external structure.

As such, with the provision of the first mounting sleeve 21, the second mounting sleeve 22, and the third mounting sleeve 23, a connection and fixation to the box body 10 can be implemented, and the box body 10 can be more stably mounted to the external structure such as a corresponding power consuming device, thereby implementing the assembling of the battery apparatus 100.

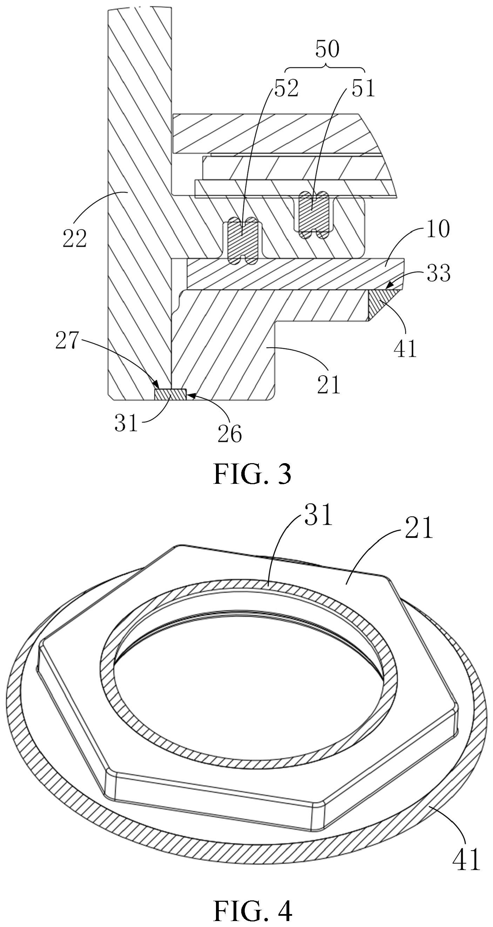

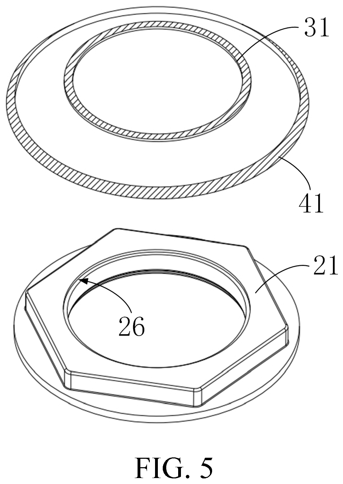

As shown in FIG. 3, FIG. 4, and FIG. 5, in some embodiments, the first sealing assembly 30 includes a first sealing ring 31. The first mounting sleeve 21 sleeves the first end 24. A first sealing groove 26 is provided on a surface of the first mounting sleeve 21 that is opposite the first end 24. A second sealing groove 27 is provided on a surface of the first end 24 that is opposite the first mounting sleeve 21. A connection end of the first sealing ring 31 is connected to a groove inner wall of the first sealing groove 26. A protrusion end of the first sealing ring 31 is clamped in the second sealing groove 27, to seal a gap between the first mounting sleeve 21 and the first end 24.

Specifically, the first mounting sleeve 21 sleeves an outer periphery of the first end 24, that is, an inner wall of the first mounting sleeve 21 is disposed opposite an outer peripheral surface of the first end 24. The first sealing groove 26 is provided on the inner wall of the first mounting sleeve 21. An outer edge of the first sealing ring 31 is formed into the connection end of the first sealing ring 31. The first sealing ring 31 surrounds and is clamped in the first sealing groove 26, so that the first sealing ring 31 can be fixedly disposed in the first sealing groove 26.

Meanwhile, an inner edge of the first sealing ring 31 is formed into the protrusion end of the first sealing ring 31. The second sealing groove 27 is provided on the outer peripheral surface of the first end 24. Positions of the second sealing groove 27 and the first sealing groove 26 correspond to each other. When the first mounting sleeve 21 sleeves the outer periphery of the first end 24, the protrusion end of the first sealing ring 31 is clamped in the second sealing groove 27. As such, the first sealing ring 31 is more stably sealed between the first mounting sleeve 21 and the first end 24.

With the foregoing structure, the first sealing ring 31 can be more stably sealed between the first mounting sleeve 21 and the second end 25 of the second mounting sleeve 22, thereby improving the sealing effect between them.

In addition, a cross section of the first sealing ring 31 may be set to a rectangle, but is not limited thereto. As such, the first sealing ring 31 can be more stably clamped in the first sealing groove 26 and the second sealing groove 27, and a surface contact can be formed between the first sealing ring 31 and each of the first sealing groove 26 and the second sealing groove 27, thereby improving the sealing effect.

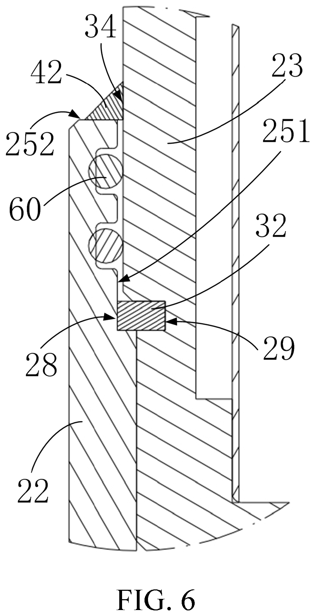

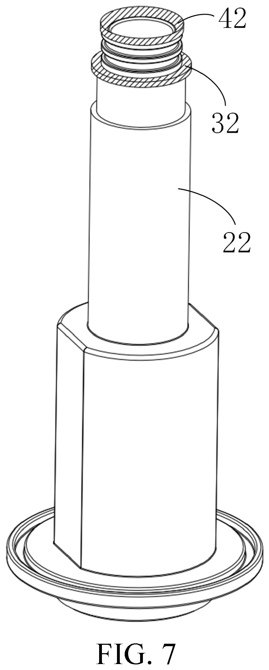

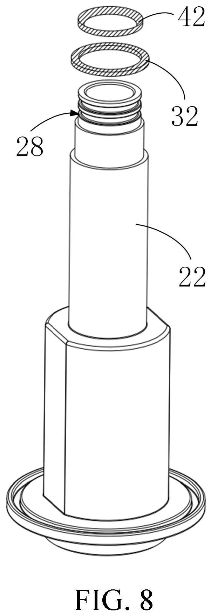

As shown in FIG. 6, FIG. 7, and FIG. 8, in some embodiments, the first sealing assembly 30 further includes a second sealing ring 32. The third mounting sleeve 23 sleeves the second end 25. A first surface 251 of the second end 25 is disposed opposite the third mounting sleeve 23. A third sealing groove 28 is provided on the first surface 251. A fourth sealing groove 29 is provided on a surface of the third mounting sleeve 23 that is opposite the first surface 251. A connection end of the second sealing ring 32 is connected to a groove inner wall of the third sealing groove 28. A protrusion end of the second sealing ring 32 is clamped in the fourth sealing groove 29, to seal a gap between the first surface 251 and the third mounting sleeve 23.

Specifically, the third mounting sleeve 23 sleeves an outer periphery of the second end 25 of the second mounting sleeve 22. An outer peripheral surface of the second end 25 is disposed opposite an inner wall of the third mounting sleeve 23. That is, the outer peripheral surface of the second end 25 is formed into the first surface 251, and the third sealing groove 28 is provided on the first surface 251.

The second sealing ring 32 is disposed as surrounding the outer periphery of the second end 25. An inner edge of the second sealing ring 32 is formed into the connection end of the second sealing ring 32 and is connected to the groove inner wall of the third sealing groove 28, so as to fix the second sealing ring 32 in the third sealing groove 28.

Meanwhile, an outer edge of the second sealing ring 32 is formed into the protrusion end of the second sealing ring 32. The fourth sealing groove 29 is provided on the inner wall of the third mounting sleeve 23. The position of the fourth sealing groove 29 corresponds to the position of the third sealing groove 28. When the third mounting sleeve 23 sleeves the outer periphery of the second end 25, the protrusion end of the second sealing ring 32 is clamped in the fourth sealing groove 29. As such, the second sealing ring 32 can be more stably sealed between the third mounting sleeve 23 and the second end 25 of the second mounting sleeve 22.

With the foregoing structure, the second sealing ring 32 can be more stably sealed between the third mounting sleeve 23 and the second end 25 of the second mounting sleeve 22, thereby improving the sealing effect between them.

In addition, a cross section of the second sealing ring 32 may be set to a rectangle, but is not limited thereto. As such, the second sealing ring 32 can be more stably clamped in the third sealing groove 28 and the fourth sealing groove 29, and a surface contact can be formed between the second sealing ring 32 and each of the third sealing groove 28 and the fourth sealing groove 29, thereby improving the sealing effect.

In some embodiments, the battery apparatus 100 further includes a second sealing assembly 40, the second sealing assembly 40 being sealed between the first mounting sleeve 21 and the box body 10. In some embodiments, the battery apparatus 100 further includes a second sealing assembly 40, the second sealing assembly 40 being sealed between the second mounting sleeve 22 and the third mounting sleeve 23.

Specifically, the second sealing assembly 40 may be sealed between the first mounting sleeve 21 and the box body 10, and may alternatively be sealed between the second mounting sleeve 22 and the third mounting sleeve 23, thereby further sealing a gap between the first mounting sleeve 21 and the box body 10 and a gap between the second mounting sleeve 22 and the third mounting sleeve 23.

As such, with the provision of the second sealing assembly 40, the sealing between the first mounting sleeve 21 and the box body 10 and between the second mounting sleeve 22 and the third mounting sleeve 23 can be implemented, thereby further improving the sealing effect.

In some embodiments, the second sealing assembly 40 includes a third sealing ring 41. The third sealing ring 41 encloses an outer periphery of the first mounting sleeve 21. The third sealing ring 41 has a first sealing surface 33, and the first sealing surface 33 is attached to a surface of the box body 10.

Specifically, a side surface of the third sealing ring 41 that faces the bottom protection plate can be formed into the first sealing surface 33. As such, the first sealing surface 33 and a surface of the bottom protection plate are attached to each other, resulting in a surface contact between them, which can further improve the sealing effect.

As a specific embodiment, a cross section of the third sealing ring 41 may be constructed into a right triangle, where one right-angle side is connected to the first mounting sleeve 21, and the other right-angle side is formed into the first sealing surface 33 and is attached to the surface of the bottom protection plate, thereby implementing the sealing between the first mounting sleeve 21 and the box body 10.

With the foregoing structure, a contact area between the third sealing ring 41 and the surface of the box body 10 can be increased, further improving the sealing effect of the third sealing ring 41 for the gap between the first mounting sleeve 21 and the box body 10.

In some embodiments, the second sealing assembly 40 further includes a fourth sealing ring 42. The second end 25 has a second surface 252 perpendicular to the first surface 251. The fourth sealing ring 42 is disposed on the second surface 252 and configured to seal a gap between the second surface 252 and the third mounting sleeve 23.

Specifically, the second surface 252 is perpendicular to the first surface 251, that is, the second surface 252 is an end surface of the second mounting sleeve 22. The fourth sealing ring 42 is disposed on the second surface 252, to integrate the fourth sealing ring 42 onto the second mounting sleeve 22.

When the third mounting sleeve 23 sleeves the outer periphery of the second end 25, the fourth sealing ring 42 can be disposed between the second surface 252 and the inner wall of the third mounting sleeve 23, thereby further sealing the gap between the second surface 252 and the third mounting sleeve 23.

With the provision of the fourth sealing ring 42, the sealing effect between the second mounting sleeve 22 and the third mounting sleeve 23 can be further improved.

In some embodiments, the fourth sealing ring 42 has a second sealing surface 34, the second sealing surface 34 being attached to a surface of the third mounting sleeve 23.

Specifically, a side surface of the fourth sealing ring 42 that faces the third mounting sleeve 23 is formed into the second sealing surface 34. As such, the second sealing surface 34 and the third mounting sleeve 23 are attached to each other, resulting in a surface contact between them, which can further improve the sealing effect.

As a specific embodiment, a cross section of the fourth sealing ring 42 may be constructed into a right triangle, where one right-angle side is connected to the second surface 252, and the other right-angle side is formed into the second sealing surface 34 and is attached to the inner wall of the third mounting sleeve 23, thereby implementing the sealing between the second mounting sleeve 22 and the third mounting sleeve 23.

With the foregoing structure, a contact area between the fourth sealing ring 42 and the inner wall of the third mounting sleeve 23 can be increased, further improving the sealing effect of the fourth sealing ring 42 for the gap between the second mounting sleeve 22 and the third mounting sleeve 23.

In some embodiments, a third sealing assembly 50 is further provided between the second mounting sleeve 22 and the box body 10. In some embodiments, a fourth sealing assembly 60 is further provided between the second mounting sleeve 22 and the third mounting sleeve 23.

Specifically, the third sealing assembly 50 may be further provided at a position where the second mounting sleeve 22 is connected to the box body 10. The third sealing assembly 50 is sandwiched between the second mounting sleeve 22 and the box body 10, which can further improve the sealing effect between the second mounting sleeve 22 and the box body 10.

Further, the fourth sealing assembly 60 may be further provided at a position where the second mounting sleeve 22 is connected to the third mounting sleeve 23. The fourth sealing assembly 60 may include a plurality of sealing loops. Each sealing loop may sleeve an outer periphery of the second mounting sleeve 22 and is sandwiched between the second mounting sleeve 22 and the third mounting sleeve 23, which can further improve the sealing effect between the second mounting sleeve 22 and the third mounting sleeve 23.

It may be understood that the sealing loop may be set to a rubber sealing ring, so as to implement an interference fit.

With the foregoing structure, the sealing effect between the second mounting sleeve 22 and the box body 10 or between the second mounting sleeve 22 and the third mounting sleeve 23 can be further improved, making the sealing performance of the entire structure of the battery apparatus 100 better.

In some embodiments, the third sealing assembly 50 includes at least one fifth sealing ring 51. Each fifth sealing ring 51 is sealed between the second mounting sleeve 22 and a water cooling plate of the box body 10. In some embodiments, the third sealing assembly 50 includes at least one sixth sealing ring 52. Each sixth sealing ring 52 is sealed between the second mounting sleeve 22 and the bottom protection plate of the box body 10. As such, the sealing effect between the second mounting sleeve 22 and the box body 10 can be further improved.

Based on a concept the same as that of the foregoing battery apparatus 100, the present application further provides a power consuming device, including the foregoing battery apparatus 100.

According to one or more embodiments, during use of the present application, first, the second mounting sleeve 22 is disposed as penetrating through the mounting hole of the box body 10, and both the first end 24 and the second end 25 of the second mounting sleeve 22 extend out of the mounting hole.

Next, the first mounting sleeve 21 is disposed as sleeving the first end 24, and at the same time, the protrusion end of the first sealing ring 31 is clamped in the second sealing groove 27, so as to implement a sealing fit between the inner wall of the first mounting sleeve 21 and an outer peripheral surface of the second mounting sleeve 22.

Further, the third mounting sleeve 23 is disposed as sleeving the second end 25. In this case, the protrusion end of the second sealing ring 32 is clamped in the fourth sealing groove 29, so as to implement a sealing fit between the outer peripheral surface of the second mounting sleeve 22 and the inner wall of the third mounting sleeve 23.

The third sealing ring 41 is sealed between an outer peripheral surface of the first mounting sleeve 21 and the surface of the bottom protection plate, so as to implement a sealing fit between the outer peripheral surface of the first mounting sleeve 21 and the surface of the bottom protection plate.

Further, the fourth sealing ring 42 is sealed between the end surface of the second mounting sleeve 22 and the inner wall of the third mounting sleeve 23, which can implement a sealing fit between the end surface of the second mounting sleeve 22 and the inner wall of the third mounting sleeve 23.

As such, the first sealing ring 31 and the third sealing ring 41 are integrated onto the first mounting sleeve 21, and the second sealing ring 32 and the fourth sealing ring 42 are integrated onto the second mounting sleeve 22. This can effectively reduce the number of assembly parts in an assembling process, simplifying and reducing the difficulty of the assembling process. In addition, a protrusion end of each sealing ring forms a lip sealing structure, which can further improve the sealing effect.

The technical features in the foregoing embodiments may be randomly combined. For concise description, not all possible combinations of the technical features in the embodiments are described. However, provided that combinations of these technical features do not conflict with each other, the combinations of the technical features should be considered as falling within the scope described in this specification.

The foregoing embodiments merely express several implementations of the present application. The descriptions thereof are relatively specific and detailed, but should not be understood as limitations to the scope of the present application. It should be noted that for a person of ordinary skill in the art, several variations and improvements can be made without departing from the concept of the present application. These variations and improvements all belong to the protection scope of the present application. Therefore, the protection scope of the patent of the present application shall be subject to the appended claims.

## Claims

1. A battery apparatus, comprising:
a box body;
at least two mounting members connected to the box body and configured to fix the box body to an external structure; and
a first sealing assembly disposed on at least one of the mounting members and having a connection end and a protrusion end, wherein the connection end is connected to a connection surface of the corresponding mounting member, the protrusion end protrudes from the connection surface of the corresponding mounting member, and the protrusion end is sealed between the at least two mounting members.

2. The battery apparatus according to claim 1, wherein the first sealing assembly is constructed into an elastic sealing member.

3. The battery apparatus according to claim 1 or 2, wherein each of the mounting members comprises a first mounting sleeve, a second mounting sleeve, and a third mounting sleeve, a mounting hole is provided on the box body, the second mounting sleeve has a first end and a second end that are disposed opposite each other, the second mounting sleeve penetrates through the mounting hole, the first end and the second end both extend out of the mounting hole, the first mounting sleeve is connected to the first end, and the third mounting sleeve is connected to the second end.

4. The battery apparatus according to claim 3, wherein the first sealing assembly comprises a first sealing ring, the first mounting sleeve sleeves the first end, a first sealing groove is provided on a surface of the first mounting sleeve that is opposite the first end, a second sealing groove is provided on a surface of the first end that is opposite the first mounting sleeve, a connection end of the first sealing ring is connected to a groove inner wall of the first sealing groove, and a protrusion end of the first sealing ring is clamped in the second sealing groove, to seal a gap between the first mounting sleeve and the first end.

5. The battery apparatus according to claim 3 or 4, wherein the first sealing assembly further comprises a second sealing ring, the third mounting sleeve sleeves the second end, a first surface of the second end is disposed opposite the third mounting sleeve, a third sealing groove is provided on the first surface, a fourth sealing groove is provided on a surface of the third mounting sleeve that is opposite the first surface, a connection end of the second sealing ring is connected to a groove inner wall of the third sealing groove, and a protrusion end of the second sealing ring is clamped in the fourth sealing groove, to seal a gap between the first surface and the third mounting sleeve.

6. The battery apparatus according to claim 5, wherein the battery apparatus further comprises a second sealing assembly, the second sealing assembly being sealed between the first mounting sleeve and the box body.

7. The battery apparatus according to claim 5 or 6, wherein the battery apparatus further comprises a second sealing assembly, the second sealing assembly being sealed between the second mounting sleeve and the third mounting sleeve.

8. The battery apparatus according to claim 6 or 7, wherein the second sealing assembly comprises a third sealing ring, the third sealing ring encloses an outer periphery of the first mounting sleeve, the third sealing ring has a first sealing surface, and the first sealing surface is attached to a surface of the box body.

9. The battery apparatus according to claim 8, wherein the second sealing assembly further comprises a fourth sealing ring, the second end has a second surface perpendicular to the first surface, and the fourth sealing ring is disposed on the second surface and configured to seal a gap between the second surface and the third mounting sleeve.

10. The battery apparatus according to claim 9, wherein the fourth sealing ring has a second sealing surface, and the second sealing surface is attached to a surface of the third mounting sleeve.

11. The battery apparatus according to any one of claims 3 to 10, wherein a third sealing assembly is further provided between the second mounting sleeve and the box body.

12. The battery apparatus according to any one of claims 3 to 11, wherein a fourth sealing assembly is further provided between the second mounting sleeve and the third mounting sleeve.

13. The battery apparatus according to claim 11 or 12, wherein the third sealing assembly comprises at least one fifth sealing ring, and each fifth sealing ring is sealed between the second mounting sleeve and a water cooling plate of the box body.

14. The battery apparatus according to any one of claims 11 to 13, wherein the third sealing assembly comprises at least one sixth sealing ring, and each sixth sealing ring is sealed between the second mounting sleeve and a bottom protection plate of the box body.

15. A power consuming device, comprising the battery apparatus according to any one of claims 1 to 114.
